# EUROPEAN PATENT SPECIFICATION

(11) **EP 3 310 048 B1**
(45) Date of publication and mention of the grant of the patent: **04.12.2019**
(21) Application number: 16877481.8
(22) Date of filing: 31.10.2016
(51) Int. Cl.: H04N 17/00, H04N 21/2343, H04N 21/43

(54) **VIDEO BIT RATE IDENTIFICATION METHOD AND DEVICE**
VERFAHREN UND VORRICHTUNG ZUR VIDEOBITRATENIDENTIFIZIERUNG
PROCÉDÉ ET DISPOSITIF D'IDENTIFICATION DE DÉBIT BINAIRE VIDÉO

(30) Priority: 23.12.2015 CN 201510976056
(43) Date of publication of application: 18.04.2018
(73) Proprietor: Huawei Technologies Co., Ltd., Longgang District Shenzhen, Guangdong 518129 (CN)
(72) Inventor: LIN, Gaoquan, Shenzhen Guangdong 518129 (CN)
(74) Representative: Körber, Martin Hans
(86) International application number: PCT/CN2016/104037
(87) International publication number: WO 2017/107670

(56) References cited:
- EP-A2- 1 954 057
- CN-A- 102 740 108
- CN-A- 102 883 193
- CN-A- 103 745 737
- JP-A- 2011 130 176
- US-A1- 2014 082 206
- US-A1- 2015 163 273

## Description

### TECHNICAL FIELD

The present invention relates to the field of communications technologies, and in particular, to a video bit rate identification method and apparatus.

### BACKGROUND

With development of communications network technologies, various services are widely used. Especially, a ratio of video service traffic to all service traffic is increasing, and the ratio of video data traffic in some areas has exceeded 50%. In addition, as the communications network technologies develop, operators start to shift their focus from a key performance indicator (Key Performance Indicator, KPI) of network quality to a key quality indicator (Key Quality Indicator, KQI) of user experience. For a video service, a mean opinion score (Mean Opinion Score, MOS) is mainly used to assess a KQI of the video service. The MOS of the video service mainly depends on two aspects: (1) coding and compression of a video source, where the coding and compression of the video source is represented by a bit rate; and (2) an initial buffer time and freeze duration in a video playback process. The two parameters are determined by a bit rate and a download speed of a video. The bit rate is also referred to as a bit rate, and is used to represent a quantity of bits per second required to represent video data obtained by means of compression coding, that is, a data volume of images displayed per second that are compressed, usually in unit of kilobits per second (kbps).

In conclusion, it can be learned that the MOS of the video service is directly and strongly related to the bit rate of the video service. Therefore, a key to assessing the KOI of the video service is to identify the bit rate of the video service. However, at present, only a bit rate of a non-encrypted video service can be identified in the industry while encrypted video services are widely used. Therefore, at present, how to identify a bit rate of an encrypted video service is a technical issue that needs to be addressed urgently.

US 2015/163273 (A1) discloses a device including an interface to a media session comprising transmission of a stream of one or more media segments having unparseable media containers. The device further includes a bit rate estimation module coupled to the interface, wherein the bit rate estimation module estimates a bit rate for the media session based on a ratio of a first metric to a second metric, wherein the first metric represents a sum of data lengths of the one or more media segments in the media session and the second metric represents a sum of playback durations of the one or more media segments.

### SUMMARY

Embodiments of the present invention provide a video bit rate identification method and apparatus, so as to identify a bit rate of an encrypted video service.

According to a first aspect, an embodiment of the present invention provides a video bit rate identification method according to claim 1.

According to a second aspect, an embodiment of the present invention provides a video bit rate identification apparatus according to claim 4.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a video bit rate identification method according to an embodiment of the present invention;
FIG. 2 is a schematic flowchart of another video bit rate identification method according to an embodiment of the present invention;
FIG. 3 is a schematic flowchart of another video bit rate identification method according to an embodiment of the present invention;
FIG. 4A and FIG. 4B are a schematic flowchart of another video bit rate identification method according to an embodiment of the present invention;
FIG. 5 is a schematic structural diagram of a video bit rate identification apparatus according to an embodiment of the present invention;
FIG. 6 is a schematic structural diagram of another video bit rate identification apparatus according to an embodiment of the present invention;
FIG. 7 is a schematic structural diagram of another video bit rate identification apparatus according to an embodiment of the present invention; and
FIG. 8 is a schematic structural diagram of another video bit rate identification apparatus according to an embodiment.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

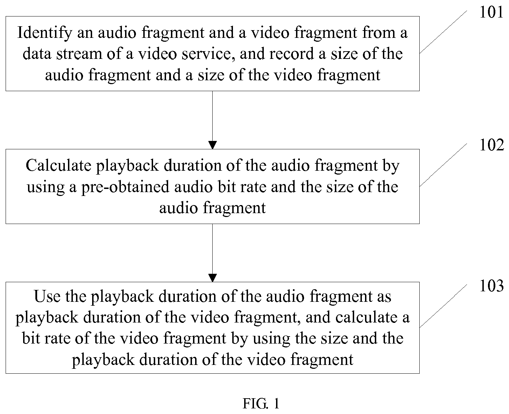

Referring to FIG. 1, FIG. 1 is a schematic flowchart of a video bit rate identification method according to an embodiment of the present invention. As shown in FIG. 1, the method includes the following steps.

101. Identify an audio fragment and a video fragment from a data stream of a video service, and record a size of the audio fragment and a size of the video fragment.

The video service may be an online playback video service, such as an online playback entertainment video, film, TV series, or a ball game that can be played on a network. In addition, the data stream of the video service may be a transport stream of the video service, for example, a Transport Control Protocol (Transport Control Protocol, TCP) stream. In addition, the data stream may be a data stream that is obtained by a network element device when the video service is transmitted on a network and the data stream is transmitted to the network element device. In actual application, when the video service is played online, all data streams of the video service are transmitted by a video service extraction server (for example, a web server) to the network element device, and then transmitted by the network element device to a terminal device, so that the terminal device can play the video service online.

When obtaining the data stream, the network element device may identify an audio fragment and a video fragment from the data stream, and record a size of the audio fragment and a size of the video fragment.

In this embodiment, the data stream may include one or more fragments, or the data stream may be divided into one or more fragments, and each fragment may be understood as a part of content of the data stream. For example, the audio fragment may be understood as one or more fragments that include audio data and that are in a data stream in which the audio data is located, and the video fragment may be understood as one or more fragments that include video data and that are in a data stream in which the video data is located. For example, when the data stream of the video service includes an audio data stream and a video data stream, the audio fragment may be one or more fragments in the audio data stream, and the video fragment may be one or more fragments in the audio data stream. For example, when the data stream of the video service includes a hybrid audio/video data stream, the audio fragment may be one or more fragments including audio data in the data stream, and the audio fragment may be one or more fragments including video data in the data stream.

In this embodiment, the size may be understood as a data volume or traffic of the audio fragment or the video fragment. In addition, the size of the audio fragment and the size of the video fragment may be obtained when the audio fragment and the video fragment are identified.

102. Calculate playback duration of the audio fragment by using a pre-obtained audio bit rate and the size of the audio fragment.

In this embodiment, the pre-obtained audio bit rate may be understood as having been obtained before step 102 is performed. In actual application, an audio bit rate of the video service is usually relatively fixed, for example, 64 kbps, 128 kbps, or 256 kbps, so that the audio bit rate can be obtained before step 102 is performed. In addition, the audio bit rate may also be understood as an audio bit rate of the video service.

In step 102, a quotient that is obtained by dividing the size of the audio fragment by the audio bit rate may be used as the playback duration of the audio fragment.

In addition, the playback duration may be understood as playable duration of the audio fragment, that is, playback duration that the audio fragment lasts. Similarly, playback duration of the video fragment may be understood as playable duration of the video fragment.

103. Use the playback duration of the audio fragment as playback duration of the video fragment, and calculate a bit rate of the video fragment by using the size and the playback duration of the video fragment.

In step 103, a quotient that is obtained by dividing the size of the video fragment by the playback duration of the video fragment may be used as the bit rate of the video fragment.

In this embodiment, according to the steps, the bit rate of the video fragment can be calculated simply by identifying the audio fragment and the video fragment and recording the size of the audio fragment and the size of the video fragment. Identifying the audio fragment and the video fragment and recording the size of the audio fragment and the size of the video fragment can be implemented without having to decrypt the audio fragment and the video fragment. Therefore, according to this implementation, a bit rate of an encrypted video service can be identified.

It should be noted that, in this embodiment, the video service may be an encrypted video service or a non-encrypted video service.

In this embodiment, the method may be applied to a network element device on a communications network, such as a serving general packet radio system support node (Serving GPRS (GPRS: General Packet Radio Service) Support Node, SGSN), a gateway GPRS support node (Gateway GPRS Support Node, GGSN), a packet data network gateway (PDN (PDN: Packet Data Network) Gateway, PGW), a radio network controller (Radio Network Controller, RNC), a base station, or another network element device. The base station may be an evolved NodeB (Evolved Node B, eNB), a common base station, or the like. In addition, the communications network may be a mobile broadband (Mobile Broad Band, MBB) network, a fixed broadband (Fixed Broad Band, FBB) network, a Long Term Evolution (Long Term Evolution, LTE) network, or the like.

In this embodiment, the audio fragment and the video fragment are identified from the data stream of the video service, and the size of the audio fragment and the size of the video fragment are recorded; the playback duration of the audio fragment is calculated by using the pre-obtained audio bit rate and the size of the audio fragment; and the playback duration of the audio fragment is used as the playback duration of the video fragment, and the bit rate of the video fragment is calculated by using the size and the playback duration of the video fragment. The bit rate of the video fragment can be calculated simply by identifying the audio fragment and the video fragment and recording the size of the audio fragment and the size of the video fragment. Identifying the audio fragment and the video fragment and recording the size of the audio fragment and the size of the video fragment can be implemented without having to decrypt the audio fragment and the video fragment. Therefore, the bit rate of the encrypted video service can be identified according to this embodiment.

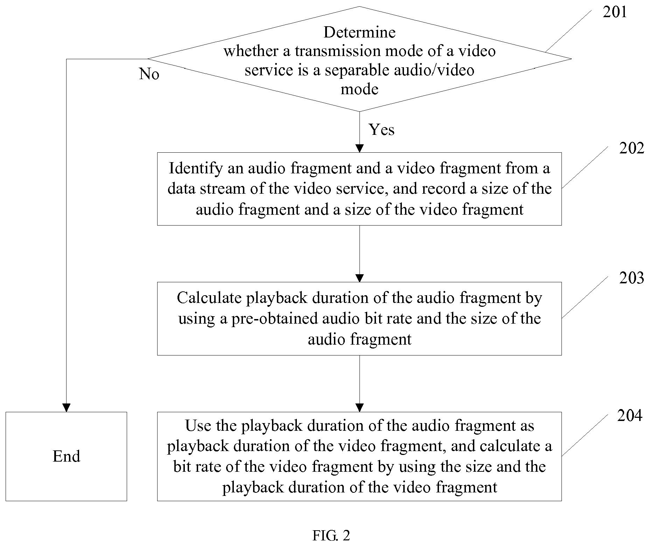

Referring to FIG. 2, FIG. 2 is a schematic flowchart of another video bit rate identification method according to an embodiment of the present invention. As shown in FIG. 2, the method includes the following steps.

201. Determine whether a transmission mode of a video service is a separable audio/video mode; and if yes, perform step 202, or if no, a process ends.

The separable audio/video mode may be understood as a mode in which an audio data stream and a video data stream may be obtained separately during transmission of the video service, that is, when a data stream of the video service is transmitted, the audio data stream of the video service may be obtained separately, and the video data stream may also be obtained separately. Alternatively, the separable audio/video mode may be understood as a mode in which an audio fragment and a video fragment may be obtained separately during transmission of the video service, that is, when a data stream of the video service is transmitted, the audio fragment of the video service may be obtained separately, and a video fragment may also be obtained separately.

In this embodiment, whether the transmission mode is the separable audio/video mode may be determined according to a quantity of data streams concurrently transmitted when the video service is transmitted. When the transmission mode of the video service is a mode in which there are at least two concurrently transmitted data streams, the transmission mode of the video service is the separable audio/video mode. For example, the method may include the following step:
identifying the transmission mode of the video service, and when the transmission mode of the video service is the transmission mode in which there are at least two concurrently transmitted data streams, performing step 202.

In this implementation, a bit rate of a video fragment of the video service can be calculated when the transmission mode of the video service is the transmission mode in which there are at least two concurrently transmitted data streams. Because a video service that uses the transmission mode in which there are at least two concurrently transmitted data streams is necessarily a video service in which an audio fragment and a video fragment are separable from the data streams, the bit rate of the video fragment of the video service can be calculated by using the foregoing step. That the video service is a video service in which an audio fragment and a video fragment are separable from a data stream can be determined without having to analyze traffic of the data stream of the video service or an uplink request included in the data stream. Therefore, according to this implementation, a calculation amount can be reduced and efficiency of calculating the bit rate of the video fragment can be improved.

In addition, in this embodiment, a characteristic such as the traffic of the data stream of the video service or the uplink request in the data stream may alternatively be used to determine whether the audio and the video are separable from the data stream. For example, when one uplink request appears in the data stream, immediately followed by two concurrent data fragments, whether the audio and the video are separable from the data stream may be determined. Alternatively, when a large-traffic data fragment and a small-traffic data fragment appear at a same time in the data stream, whether the audio and the video are separable from the data stream may be determined.

202. Identify an audio fragment and a video fragment from a data stream of the video service, and record a size of the audio fragment and a size of the video fragment.

In this step, when a video service provisioning server transmits data streams of the video service to a terminal device, a network element device separates the audio fragment and the video fragment from these data streams. For example, when the video service includes a hybrid audio/video data stream, the audio fragment and the video fragment may be separated from the data stream in step 202. Alternatively, when the video service includes an audio data stream and a video data stream, the audio fragment may be separated from the audio data stream and the video fragment may be separated from the video data stream in step 202.

In addition, the step of identifying an audio fragment and a video fragment from a data stream of a video service may include:
identifying a plurality of data fragments included in the data stream of the video service, using a pre-obtained audio bit rate to identify the audio fragment from the plurality of data fragments, and identifying a data fragment, other than the audio fragment, from the plurality of data fragments as the video fragment.

In actual application, an audio bit rate of the video service is usually fixed, for example, 64 kbps, 128 kbps, or 256 kbps; and playback duration of the audio fragment is usually fixed within a time range, for example, within a time range of 5 to 10 seconds. Therefore, in step 202, 64 kbps, 128 kbps, or 256 kbps may be used to multiply a value of playback duration within the time range, to determine whether a calculation result is approximately equal to or equal to a size of a data fragment. If a calculation result obtained by using one of the bit rates is approximately equal to or equal to the size of the data fragment, and equal to the size of the data fragment, it may be determined that the bit rate is the audio bit rate of the data fragment, and that the data fragment is the audio fragment. In addition, in this embodiment, bit rates of all audio fragments in the video service may be the same.

In addition, in some scenarios, audio bit rates of video services provided by a same server may be fixed. In this case, a pre-obtained audio bit rate of the video services provided by the server may be used as the foregoing pre-obtained audio rate, and then the audio bit rate is used to identify an audio fragment.

Alternatively, the step of identifying an audio fragment and a video fragment from a data stream of a video service may include:
using the pre-obtained audio bit rate to identify an audio data stream from a plurality of data streams included in the video service, identifying a data fragment included in the audio data stream as the audio fragment, using a data stream, other than the audio data stream, of the plurality of data streams as a video data stream, and identifying a data fragment included in the video data stream as the video fragment.

In actual application, playback duration of the audio data stream is also usually fixed within a time range. Therefore, the audio data stream can be identified by using the audio fragment identification method described above.

In addition, in this embodiment, the data stream may further include an uplink request. In this case, the uplink request may be used to identify different fragments from the data stream. Certainly, in this embodiment, different fragments may alternatively be identified from the data stream by using a transmission parameter such as a transmission timeslot.

203. Calculate playback duration of the audio fragment by using a pre-obtained audio bit rate and the size of the audio fragment.

204. Use the playback duration of the audio fragment as playback duration of the video fragment, and calculate a bit rate of the video fragment by using the size and the playback duration of the video fragment.

In this embodiment, step 202 may further include:
identifying at least one audio fragment and at least one video fragment from the data stream of the video service, and recording a size of each audio fragment and a size of each video fragment.

Step 204 may include:
when the audio fragment is in a one-to-one correspondence to the video fragment in the data stream of the video service, obtaining playback duration of each video fragment, and calculating a bit rate of each video fragment, where the playback duration of the video fragment is playback duration of an audio fragment corresponding to the video fragment, and the bit rate of the video fragment is calculated by using the playback duration and the size of the video fragment; or
when the audio fragment is not in a one-to-one correspondence to the video fragment in the data stream of the video service, adding up playback duration of all audio fragments, and using an obtained value as total playback duration of the at least one video fragment; adding up sizes of all video fragments, and using an obtained value as a total size of the at least one video fragment; and calculating an average bit rate of the at least one video fragment by using the total playback duration and the total size of the at least one video fragment.

When the audio fragment is in a one-to-one correspondence to the video fragment in the data stream of the video service, a quantity of audio fragments is the same as a quantity of video fragments in the data stream of the video service.

In this implementation, the quantity of audio fragments is the same as the quantity of video fragments in the data stream of the video service when the audio fragment is in a one-to-one correspondence to the video fragment in the data stream of the video service. This may be understood as follows: That the audio fragment is in a one-to-one correspondence to the video fragment in the data stream of the video service means that the quantity of the audio fragments is the same as the quantity of the video fragments in the data stream of the video service. Certainly, that the audio fragment is in a one-to-one correspondence to the video fragment in the data stream of the video service may alternatively mean that the quantity of the audio fragments is the same as the quantity of the video fragments in the data stream of the video service, and playback duration of the audio fragment is also the same as playback duration of the video fragment in the data stream of the video service.

Certainly, in this implementation, playback duration of each audio fragment may be calculated in step 203. In addition, the at least one audio fragment and the at least one video fragment may be understood as all audio fragments and video fragments included in the video service, or some audio fragments and some video fragments included in the video service.

In this implementation, that the audio fragment is in a one-to-one correspondence to the video fragment in the data stream of the video service may be that audio fragments are in a one-to-one correspondence to video fragments included in one or more data streams in the video service. For example, when the video service includes an audio data stream and a video data stream, that the audio fragment is in a one-to-one correspondence to the video fragment in the data stream of the video service may be that an audio fragment included in the audio data stream is in a one-to-one correspondence to a video fragment included in the video data stream. Alternatively, when the video service includes a hybrid audio/video data stream, that the audio fragment is in a one-to-one correspondence to the video fragment in the data stream of the video service may be that an audio fragment included in the video service is in a one-to-one correspondence to a video fragment included in the video data stream.

In addition, that playback duration of the audio fragment is the same as playback duration of the video fragment in the data stream of the video service may be understood as that playback duration of a plurality of audio fragments in the data stream of the video service are respectively the same as playback duration of a plurality of video fragments in the data stream of the video service. For example, if the data stream of the video service includes an audio fragment 0 to an audio fragment 10, and the data stream of the video service includes a video fragment 0 to a video fragment 10, playback duration of the audio fragment 0 to the audio fragment 10 is respectively the same as playback duration of the video fragment 0 to the video fragment 10. The audio fragment 0 to the audio fragment 10 may be sorted according to transmission start time or a transmission sequence. Similarly, the video fragment 0 to the video fragment 10 may also be sorted according to transmission start time or a transmission sequence.

In this implementation, when the audio fragment is in a one-to-one correspondence to the video fragment in the data stream of the video service, the playback duration of each video fragment may be obtained. Because the playback duration of each audio fragment may be calculated according to step 203, and the audio fragment is in a one-to-one correspondence to the video fragment, the playback duration of the audio fragment may be used as playback duration of a video fragment corresponding to the audio fragment. For example, because the audio fragment 0 to the audio fragment 10 are in a one-to-one correspondence to the video fragment 0 to the video fragment 10, the playback duration of the audio fragment 0 to the audio fragment 10 may be used as playback duration of the video fragment 0 to the video fragment 10, respectively. When the playback duration of each video fragment is determined, because the size of each video fragment is recorded in step 202, the bit rate of each video fragment can be calculated.

Certainly, in this implementation, when the audio fragments are in a one-to-one correspondence to the video fragments in the data stream of the video service, an average bit rate of the video fragments of the video service can be further calculated.

In addition, in this implementation, when the audio fragments are not in a one-to-one correspondence to the video fragments in the data stream of the video service, playback duration of all the audio fragments can be added up, and an obtained value is used as total playback duration of the at least one video fragment; and sizes of all the video fragments are added up, and an obtained value is used as a total size of the at least one video fragment, so that an average bit rate of the video service can be calculated.

In addition, in this implementation, the method may further include the following step:
identifying a quantity of concurrently transmitted data streams of the video service, and when the quantity of concurrently transmitted data streams of the video service is greater than or equal to 2, determining that audio fragments are in a one-to-one correspondence to video fragments in the data streams of the video service.

In actual application, a Hyper Text Transfer Protocol Live Streaming (HTTP (HTTP: Hyper Text Transfer Protocol) Live Streaming, HLS) transmission mode is a transmission mode in which there are two or more concurrent TCP streams, and in the HLS transmission mode, audio fragments are in a one-to-one correspondence to video fragments. Therefore, in this implementation, when a quantity of concurrently transmitted data streams of the video service is greater than or equal to 2, it is determined that the audio fragments are in a one-to-one correspondence to the video fragments in the data streams of the video service.

In this implementation, that the audio fragments are in a one-to-one correspondence to the video fragments in the data stream of the video service can be determined by identifying the quantity of data streams. Therefore, there is no need to compare transmission start time of the fragments, and device power consumption is reduced.

In addition, in this implementation, the method may further include the following step:
calculating a quantity of audio fragments and a quantity of video fragments in the data stream of the video service, and determining, according to the quantity of audio fragments and the quantity of video fragments in the data stream of the video service, whether the audio fragments are in a one-to-one correspondence to the video fragments in the data stream of the video service.

In this implementation, transmission start time of each audio fragment and each video fragment in the data stream of the video service may be further recorded. The transmission start time may be understood as time when the audio fragment or the video fragment starts to be transmitted. In this case, after the audio fragments and the video fragments are separately sorted according to the transmission start time, comparison may be performed to check whether the quantity of audio fragments is the same as the quantity of the video fragments, so as to determine whether the audio fragments are in a one-to-one correspondence to the video fragments in the data stream of the video service. If the quantity of audio fragments is the same as the quantity of video fragments, it is determined that the audio fragments are in a one-to-one correspondence to the video fragments in the data stream of the video service; otherwise, it is determined that the audio fragments are not in a one-to-one correspondence to the video fragments in the data stream of the video service. Certainly, the audio fragments and the video fragments may be separately sorted according to respective transmission sequences, and then determining is performed according to the sequence. The one-to-one correspondence herein may be further understood as that, after the audio fragments and the video fragments are sorted separately, an audio fragment is corresponding to a video fragment with a same sequence number as the audio fragment, that is, the n^{th} audio fragment in a sequence of the audio fragments is corresponding to the n^{th} video fragment in a sequence of the video fragments, where n is a sequence number in the sequence.

In addition, in the foregoing implementation, for a video service provided by a specific server or a specific webpage, an audio fragment may be in a one-to-one correspondence to a video fragment by default, or an audio fragment is not in a one-to-one correspondence to a video fragment by default. For example, for a video service of a webpage, according to a result obtained by measuring a plurality of video services in advance, it is learned that a one-to-one correspondence probability is quite high or higher than a threshold (for example, higher than 80% or 90%), that is, audio fragments are usually in a one-to-one correspondence to video fragments in the video service of the webpage. Therefore, in this implementation, a calculation method used in a one-to-one correspondence scenario may be directly used to calculate the bit rate of each audio fragment.

In this embodiment, based on the embodiment shown in FIG. 1, a plurality of optional implementations are added, and a bit rate of an encrypted video service can be identified in all the implementations.

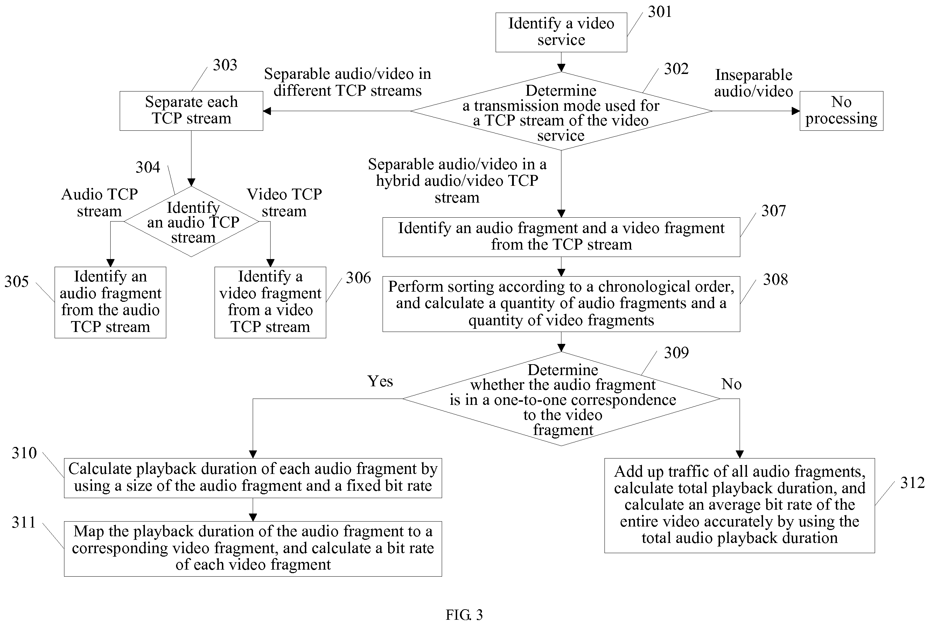

Referring to FIG. 3, FIG. 3 is a schematic flowchart of another video bit rate identification method according to an embodiment of the present invention. As shown in FIG. 3, the method includes the following steps.

301. Identify a video service.

302. Determine a transmission mode used for a TCP stream of the video service.

In the step, a characteristic, including but not limited to a TCP stream quantity, TCP stream traffic, or an uplink request in the TCP stream, may be used to determine whether an audio and a video are separable from the TCP stream.

In an inseparable audio/video scenario, no processing is performed, that is, the scenario is not within the scope of this patent.

303. When the transmission mode of the video service is a mode in which an audio and a video are separable from a TCP stream and the audio and the video belong to different TCP streams, separate each TCP stream.

304. Identify an audio TCP stream.

In this step, the audio TCP stream may be identified according to a relatively fixed audio bit rate, and a TCP stream different from the audio TCP stream is used as a video TCP stream in the video.

305. Identify an audio fragment from the audio TCP stream.

In the video, if the separated audio TCP stream includes a plurality of uplink requests, the uplink requests may be used to identify different fragments, and a size and time of each audio fragment are recorded.

306. Identify a video fragment from a video TCP stream.

307. When the transmission mode of the video service is a mode in which an audio and a video are separable from a TCP stream but the audio and the video belong to a hybrid audio/video TCP stream, identify audio fragments and video fragments from the TCP stream.

In this step, a plurality of uplink requests included in the TCP stream may be used to identify different fragments and determine whether a fragment is an audio fragment or a video fragment. The audio fragment may be determined according to a relatively fixed audio bit rate, and then the video fragment is identified. In addition, a size and time of each audio fragment and a size and time of each video fragment are recorded.

308. Sort the identified video fragments and audio fragments separately according to chronological orders, and calculate a quantity of audio fragments and a quantity of video fragments.

309. Determine whether the audio fragments are in a one-to-one correspondence to the video fragments.

That the audio fragments are in a one-to-one correspondence to the video fragments may be understood as that the quantity of audio fragments is the same as the quantity of video fragments.

310. When the audio fragments are in a one-to-one correspondence to the video fragments, calculate playback duration of each audio fragment by using a size of the audio fragment and a fixed bit rate.

311. Map playback duration of the audio fragment to playback duration of a corresponding video fragment, and calculate a bit rate of each video fragment.

Certainly, in this step, an average bit rate of the entire video can also be calculated accurately.

312. When the audio fragments are not in a one-to-one correspondence to the video fragments, add up traffic of all the audio fragments, calculate total playback duration, and calculate an average bit rate of the entire video accurately by using the total audio playback duration.

In this step, the total audio playback duration may be used as total audio playback duration, and then the average bit rate of the entire video is calculated by using a total size of the video fragments.

It should be noted that, in this embodiment, all the steps may be performed by a network element device.

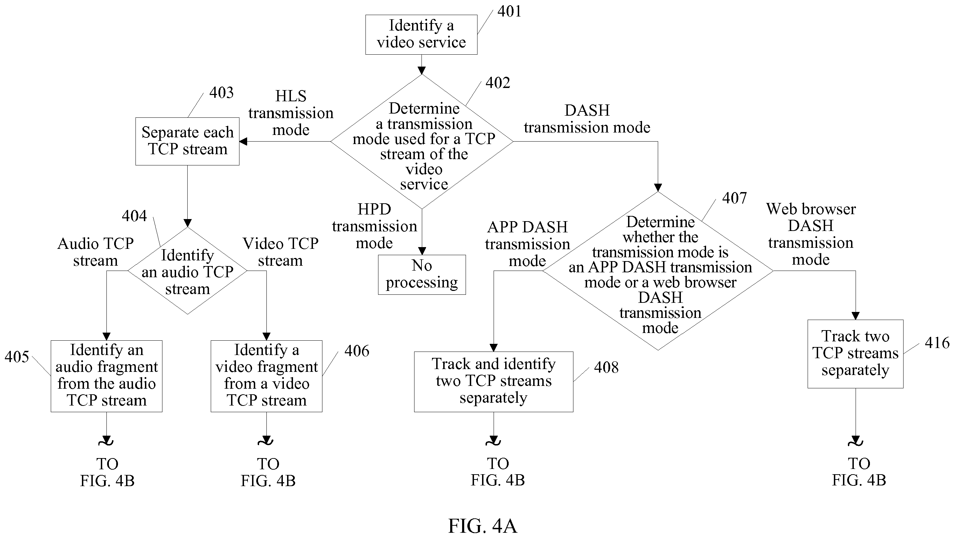

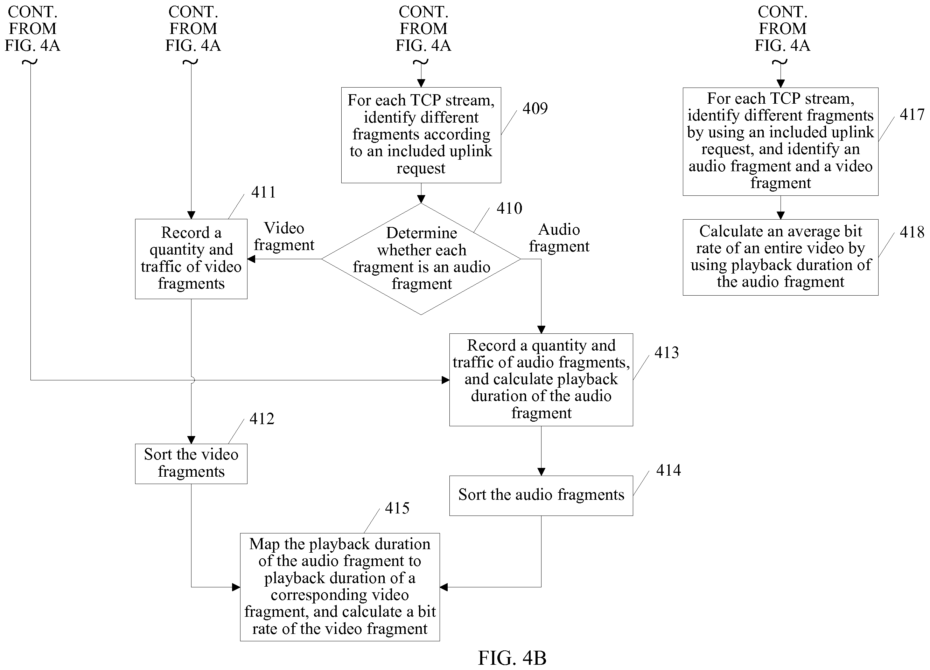

Referring to FIG. 4A and FIG. 4B, FIG. 4A and FIG. 4B are a schematic flowchart of another video bit rate identification method according to an embodiment of the present invention. In this embodiment, a video webpage is used as an example for description. As shown in FIG. 4A and FIG. 4B, the method includes the following steps.

401. Identify a video service of a video webpage.

402. Determine a transmission mode used for the video service.

In this step, it may be determined whether the transmission mode is a TCP stream transmission mode in which an audio and a video are separable or inseparable from a TCP stream. Whether the audio and the video are separable from the TCP stream may be determined according to a TCP stream quantity, TCP stream traffic, or traffic corresponding to an uplink request in a TCP stream.

For example, determining is performed according to a characteristic of a video provided by a specific video service provider. For example, for the video webpage described in this embodiment, three transmission modes may be determined according to a quantity of concurrent TCP streams. In a Dynamic Adaptive Streaming over HTTP (Dynamic Adaptive Streaming over HTTP, DASH) transmission mode, there are two concurrent TCP streams; in HLS, there are two or more concurrently transmitted TCP streams; in HTTP progressive download (HTTP Progressive Download, HPD) in which the audio and video are inseparable, there is only one hybrid audio/video TCP stream.

An inseparable audio/video scenario is not within the scope of this patent, and is not described in this embodiment.

403. In an HLS transmission mode in which an audio and a video are separable from a TCP stream and the audio and the video belong to different TCP streams, separate each TCP stream.

404. Identify an audio TCP stream.

In this step, the audio TCP stream may be determined according to a relatively fixed audio bit rate, and then a video TCP stream can be identified.

405. Identify an audio fragment from the audio TCP stream.

In this step, if the separated TCP stream includes a plurality of uplink requests, the uplink requests may be used to identify different fragments, and a size and time of each audio fragment are recorded.

406. Identify a video fragment from a video TCP stream.

407. In a DASH transmission mode in which an audio and a video are separable from a TCP stream but the audio and the video belong to a hybrid audio/video TCP stream, determine whether the transmission mode is an application (Application, APP) DASH transmission mode or a web browser (Web Chrome) DASH transmission mode.

In this step, determining may be performed according to a characteristic such as an uplink request or a downlink request of a specific size that is initiated in the TCP stream of the APP DASH transmission mode. For example, determining is performed according to an uplink request of a size of 1 KB or a downlink request response of a size of 1.5 KB.

408. In the APP DASH transmission mode, track and identify two TCP streams separately.

409. For each TCP stream, identify different fragments according to an included uplink request.

410. Determine whether each fragment is an audio fragment.

In this step, a video fragment may be further identified, and a size and time of each audio fragment and a size and time of each video fragment are recorded.

411. For video fragments, record a quantity and traffic of video fragments.

412 Sort the video fragments.

413. For audio fragments, record a quantity and traffic of audio fragments, and calculate playback duration of the audio fragment.

414 Sort the audio fragments.

415. Map the playback duration of the audio fragment to playback duration of a corresponding video fragment, and calculate a bit rate of the video fragment.

In the HLS transmission mode and the APP DASH transmission mode, the audio fragments are in a one-to-one correspondence to the video fragments, that is, a quantity of the audio fragments is the same as a quantity of the video fragments. Therefore, in step 414, the playback duration of the audio fragment may be calculated by using a size of each audio fragment and a fixed bit rate, and then mapped to the corresponding video fragment, and then the bit rate of each video fragment can be calculated accurately. In addition, an average bit rate of the entire video can also be calculated accurately.

416. In the Web Chrome DASH transmission mode, track two TCP streams separately.

417. For each TCP stream, identify different fragments by using an included uplink request, and identify an audio fragment and a video fragment.

418. Calculate an average bit rate of an entire video by using playback duration of the audio fragment.

In the Web Chrome DASH transmission mode, the audio fragments are not in a one-to-one correspondence to the video fragments. Therefore, different fragments are identified by using a plurality of uplink requests included in the two TCP streams, traffic of all the audio fragments may be added up, total playback duration is calculated, and then the average bit rate of the entire video is accurately calculated by using the total audio playback duration.

It should be noted that, in this embodiment, all the steps may be performed by a network element device.

The following describes an apparatus embodiment in the present invention. The apparatus embodiment in the present invention is used to execute the method implemented in method embodiments 1 to 4 of the present invention. For ease of description, only a part related to this embodiment of the present invention is described. For specific technical details that are not disclosed in this embodiment, refer to Embodiment 1, Embodiment 2, Embodiment 3, and Embodiment 4 of the present invention.

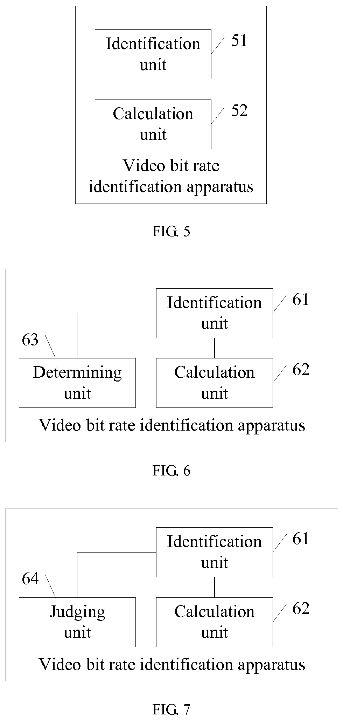

Referring to FIG. 5, FIG. 5 is a schematic structural diagram of a video bit rate identification apparatus according to an embodiment of the present invention. As shown in FIG. 5, the apparatus includes an identification unit 51 and a calculation unit 52.

The identification unit 51 is configured to: identify an audio fragment and a video fragment from a data stream of a video service, and record a size of the audio fragment and a size of the video fragment.

For a specific implementation of the identification unit 51, refer to step 101 in the embodiment shown in FIG. 1.

The calculation unit 52 is configured to calculate playback duration of the audio fragment by using a pre-obtained audio bit rate and the size of the audio fragment.

The calculation unit 52 is further configured to: use the playback duration of the audio fragment as playback duration of the video fragment, and calculate a bit rate of the video fragment by using the size and the playback duration of the video fragment.

For a specific implementation of the calculation unit 52, refer to step 102 and step 103 in the embodiment shown in FIG. 1.

In this embodiment, the units can be used to calculate the bit rate of the video fragment simply by identifying the audio fragment and the video fragment and recording the size of the audio fragment and the size of the video fragment. Identifying the audio fragment and the video fragment and recording the size of the audio fragment and the size of the video fragment can be implemented without having to decrypt the audio fragment and the video fragment. Therefore, according to this implementation, a bit rate of an encrypted video service can be identified.

It should be noted that, in this embodiment, the video service may be an encrypted video service or a non-encrypted video service.

In this embodiment, the apparatus may be applied to a network element device on a communications network, such as an SGSN, a GGSN, a PGW, an RNC, a base station, or another network element device. The base station may be an eNB, a common base station, or the like. In addition, the communications network may be an MBB network, an FBB network, an LTE network, or the like.

In this embodiment, the audio fragment and the video fragment are identified from the data stream of the video service, and the size of the audio fragment and the size of the video fragment are recorded; the playback duration of the audio fragment is calculated by using the pre-obtained audio bit rate and the size of the audio fragment; and the playback duration of the audio fragment is used as the playback duration of the video fragment, and the bit rate of the video fragment is calculated by using the size and the playback duration of the video fragment. The bit rate of the video fragment can be calculated simply by identifying the audio fragment and the video fragment and recording the size of the audio fragment and the size of the video fragment. Identifying the audio fragment and the video fragment and recording the size of the audio fragment and the size of the video fragment can be implemented without having to decrypt the audio fragment and the video fragment. Therefore, the bit rate of the encrypted video service can be identified according to this embodiment.

Referring to FIG. 6, FIG. 6 is a schematic structural diagram of another video bit rate identification apparatus according to an embodiment of the present invention. As shown in FIG. 6, the apparatus includes an identification unit 61 and a calculation unit 62.

The identification unit 61 is configured to: identify an audio fragment and a video fragment from a data stream of a video service, and record a size of the audio fragment and a size of the video fragment.

In this embodiment, the identification unit 61 may be configured to: identify a plurality of data fragments included in the data stream of the video service, use the audio bit rate to identify an audio fragment from the plurality of data fragments, and identify a data fragment, other than the audio fragment, from the plurality of data fragments as the video fragment.

In this embodiment, the identification unit 61 may be further configured to: use the audio bit rate to identify an audio data stream from a plurality of data streams included in the video service, identify as the audio fragment, a data fragment included in the audio data stream, use a data stream, other than the audio data stream, of the plurality of data streams as a video data stream, and identify as the video fragment, a data fragment included in the video data stream.

The calculation unit 62 is configured to calculate playback duration of the audio fragment by using a pre-obtained audio bit rate and the size of the audio fragment.

The calculation unit 62 is further configured to: use the playback duration of the audio fragment as playback duration of the video fragment, and calculate a bit rate of the video fragment by using the size and the playback duration of the video fragment.

In this embodiment, the identification unit may be configured to: identify a plurality of audio fragments and a plurality of video fragments from the data stream of the video service, and record a size of each audio fragment and a size of each video fragment.

The calculation unit 62 may be configured to: when the audio fragments are in a one-to-one correspondence to the video fragments in the data stream of the video service, obtain playback duration of each video fragment, and calculate a bit rate of each video fragment, where the playback duration of the video fragment is playback duration of an audio fragment corresponding to the video fragment, and the bit rate of the video fragment is calculated by using the playback duration and the size of the video fragment; or
the calculation unit 62 may be configured to: when the audio fragments are not in a one-to-one correspondence to the video fragments in the data stream of the video service, add up playback duration of all the audio fragments, and use an obtained value as total playback duration of the at least one video fragment; add up sizes of all the video fragments, and use an obtained value as a total size of the at least one video fragment; and calculate an average bit rate of the at least one video fragment by using the total playback duration and the total size of the at least one video fragment.

When the audio fragments are in a one-to-one correspondence to the video fragments in the data stream of the video service, a quantity of audio fragments is the same as a quantity of video fragments in the data stream of the video service.

Certainly, in this implementation, when the audio fragments are in a one-to-one correspondence to the video fragments in the data stream of the video service, an average bit rate of the video fragments of the video service can be further calculated.

In addition, in this implementation, when the audio fragments are not in a one-to-one correspondence to the video fragments in the data stream of the video service, playback duration of all the audio fragments can be added up, and an obtained value is used as total playback duration of the at least one video fragment; and sizes of all the video fragments are added up, and an obtained value is used as a total size of the at least one video fragment, so that an average bit rate of the video service can be calculated.

In addition, in this implementation, the apparatus may further include:
a determining unit 63, configured to: identify a quantity of concurrently transmitted data streams of the video service, and when the quantity of concurrently transmitted data streams of the video service is greater than or equal to 2, determine that audio fragments are in a one-to-one correspondence to video fragments in the data streams of the video service.

In this implementation, that the audio fragments are in a one-to-one correspondence to the video fragments in the data stream of the video service can be determined by identifying the quantity of data streams. Therefore, there is no need to compare transmission time of the fragments, and device power consumption is reduced.

In addition, in this implementation, as shown in FIG. 7, the apparatus may further include:
a judging unit 64, configured to: calculate a quantity of audio fragments and a quantity of video fragments in the data stream of the video service, and determine, according to the quantity of audio fragments and the quantity of video fragments in the data stream of the video service, whether the audio fragments are in a one-to-one correspondence to the video fragments in the data stream of the video service.

In this implementation, the judging unit 64 may further record transmission start time of the audio fragments and the video fragments, and may further separately sort the audio fragments and the video fragments or compare the fragments one by one according to the transmission start time, so as to determine whether the audio fragments are in a one-to-one correspondence to the video fragments in the data stream of the video service.

In this embodiment, the identification unit 61 may be further configured to: identify a transmission mode of the video service; and when the transmission mode of the video service is a transmission mode in which there are at least two concurrently transmitted data streams, identify an audio fragment and a video fragment from the data streams of the video service, and record a size of the audio fragment and a size of the video fragment.

In this implementation, the bit rate of the video fragment of the video service can be calculated when the transmission mode of the video service is the transmission mode in which there are at least two concurrently transmitted data streams. Because a video service that uses the transmission mode in which there are at least two concurrently transmitted data streams is necessarily a video service in which an audio fragment and a video fragment are separable from the data streams, the bit rate of the video fragment of the video service can be calculated by using the foregoing step. That the video service is a video service in which an audio fragment and a video fragment are separable from a data stream can be determined without having to analyze traffic of the data stream of the video service or an uplink request included in the data stream. Therefore, according to this implementation, a calculation amount can be reduced and efficiency of calculating the bit rate of the video fragment can be improved.

It should be noted that, the apparatus provided in this embodiment may be an apparatus that is configured to implement the methods shown in FIG. 1 to FIG. 4B.

In this embodiment, based on the embodiment shown in FIG. 5, a plurality of optional implementations are added, and a bit rate of an encrypted video service can be identified in all the implementations.

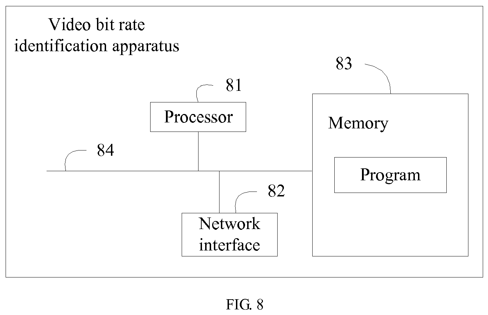

Referring to FIG. 8, FIG. 8 is a schematic structural diagram of another video bit rate identification apparatus according to an embodiment. As shown in FIG. 8, the apparatus includes: a processor 81, a network interface 82, a memory 83, and a communications bus 84. The communications bus 84 is configured to implement a connection and communication between the processor 81, the network interface 82, and the memory 83. The processor 81 executes a program stored in the memory 83 to implement the following method:
identifying an audio fragment and a video fragment from a data stream of a video service, and recording a size of the audio fragment and a size of the video fragment;
calculating playback duration of the audio fragment by using a pre-obtained audio bit rate and the size of the audio fragment; and
using the playback duration of the audio fragment as playback duration of the video fragment, and calculating a bit rate of the video fragment by using the size and the playback duration of the video fragment.

In this embodiment, the program, executed by the processor 81, of identifying an audio fragment and a video fragment from a data stream of a video service, and recording a size of the audio fragment and a size of the video fragment may include:
identifying at least one audio fragment and at least one video fragment from the data stream of the video service, and recording a size of each audio fragment and a size of each video fragment.

The program, executed by the processor 81, of using the playback duration of the audio fragment as playback duration of the video fragment, and calculating a bit rate of the video fragment by using the size and the playback duration of the video fragment may include:
when the audio fragment is in a one-to-one correspondence to the video fragment in the data stream of the video service, obtaining playback duration of each video fragment, and calculating a bit rate of each video fragment, where the playback duration of the video fragment is playback duration of an audio fragment corresponding to the video fragment, and the bit rate of the video fragment is calculated by using the playback duration and the size of the video fragment; or
when the audio fragment is not in a one-to-one correspondence to the video fragment in the data stream of the video service, adding up playback duration of all audio fragments, and using an obtained value as total playback duration of the at least one video fragment; adding up sizes of all video fragments, and using an obtained value as a total size of the at least one video fragment; and calculating an average bit rate of the at least one video fragment by using the total playback duration and the total size of the at least one video fragment.

When the audio fragment is in a one-to-one correspondence to the video fragment in the data stream of the video service, a quantity of audio fragments is the same as a quantity of video fragments in the data stream of the video service.

In this embodiment, the program executed by the processor 81 may further include:
identifying a quantity of concurrently transmitted data streams of the video service, and when the quantity of concurrently transmitted data streams of the video service is greater than or equal to 2, determining that audio fragments are in a one-to-one correspondence to video fragments in the data streams of the video service; or
calculating a quantity of audio fragments and a quantity of video fragments in the data stream of the video service, and determining, according to the quantity of audio fragments and the quantity of video fragments in the data stream of the video service, whether the audio fragments are in a one-to-one correspondence to the video fragments in the data stream of the video service.

In this embodiment, the program, executed by the processor 81, of identifying an audio fragment and a video fragment from a data stream of a video service may include:
identifying a plurality of data fragments included in the data stream of the video service, using the audio bit rate to identify the audio fragment from the plurality of data fragments, and identifying a data fragment, other than the audio fragment, from the plurality of data fragments as the video fragment; or
using the audio bit rate to identify an audio data stream from a plurality of data streams included in the video service, identifying as the audio fragment, a data fragment included in the audio data stream, using a data stream, other than the audio data stream, of the plurality of data streams as a video data stream, and identifying as the video fragment, a data fragment included in the video data stream.

In this embodiment, the program executed by the processor 81 may further include:
identifying a transmission mode of the video service; and when the transmission mode of the video service is a transmission mode in which there are at least two concurrently transmitted data streams, performing the step of identifying an audio fragment and a video fragment from a data stream of a video service, and recording a size of the audio fragment and a size of the video fragment.

In this embodiment, the apparatus may be applied to a network element device on a communications network, such as an SGSN, a GGSN, a PGW, an RNC, a base station, or another network element device. The base station may be an eNB, a common base station, or the like. In addition, the communications network may be an MBB network, an FBB network, an LTE network, or the like.

In this embodiment, the audio fragment and the video fragment are identified from the data stream of the video service, and the size of the audio fragment and the size of the video fragment are recorded; the playback duration of the audio fragment is calculated by using the pre-obtained audio bit rate and the size of the audio fragment; and the playback duration of the audio fragment is used as the playback duration of the video fragment, and the bit rate of the video fragment is calculated by using the size and the playback duration of the video fragment. The bit rate of the video fragment can be calculated simply by identifying the audio fragment and the video fragment and recording the size of the audio fragment and the size of the video fragment. Identifying the audio fragment and the video fragment and recording the size of the audio fragment and the size of the video fragment can be implemented without having to decrypt the audio fragment and the video fragment. Therefore, a bit rate of an encrypted video service can be identified according to this embodiment.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include a magnetic disc, an optical disc, a read-only memory (Read-Only Memory, ROM), or a random access memory (Random Access Memory, RAM for short).

What is disclosed above is merely embodiments of the present invention, and certainly is not intended to limit the protection scope of the present invention. Therefore, equivalent variations made in accordance with the claims of the present invention shall fall within the scope of the present invention.

## Claims

1. A video bit rate identification method, comprising:
identifying (101) an audio fragment and a video fragment from a data stream of a video service, and recording a size of the audio fragment and a size of the video fragment;
calculating (102) playback duration of the audio fragment by using a pre-obtained audio bit rate and the size of the audio fragment; and
using (103) the playback duration of the audio fragment as playback duration of the video fragment, and calculating a bit rate of the video fragment by using the size and the playback duration of the video fragment;
**characterized in that**
the identifying an audio fragment and a video fragment from a data stream of a video service, and recording a size of the audio fragment and a size of the video fragment comprises:
identifying at least one audio fragment and at least one video fragment from the data stream of the video service, and recording a size of each audio fragment and a size of each video fragment; and
the using the playback duration of the audio fragment as playback duration of the video fragment, and calculating a bit rate of the video fragment by using the size and the playback duration of the video fragment comprises:
when the audio fragment is in a one-to-one correspondence (309) to the video fragment in the data stream of the video service, obtaining a separate playback duration of each video fragment, and calculating a separate bit rate of each video fragment (311), wherein the playback duration of a video fragment is the playback duration of the audio fragment corresponding to the video fragment (310), and the bit rate of the video fragment is calculated by using the playback duration and the size of the video fragment; or
when the audio fragment is not in a one-to-one correspondence to the video fragment in the data stream of the video service, adding up playback durations of all audio fragments (312), and using an obtained value as total playback duration of the at least one video fragment; adding up sizes of all video fragments, and using an obtained value as a total size of the at least one video fragment; and calculating an average bit rate of the at least one video fragment by using the total playback duration and the total size of the at least one video fragment, wherein
when the number of audio fragments are the same as the number of video fragments,
the audio fragment is in a one-to-one correspondence to the video fragment in the data stream of the video service.

2. The method according to claim 1, wherein the identifying an audio fragment and a video fragment from a data stream of a video service comprises:
identifying a plurality of data fragments comprised in the data stream of the video service, using the audio bit rate to identify the audio fragment from the plurality of data fragments (405), and identifying a data fragment, other than the audio fragment, from the plurality of data fragments as the video fragment; or
using the audio bit rate to identify an audio data stream from a plurality of data streams comprised in the video service, identifying as the audio fragment, a data fragment comprised in the audio data stream, using a data stream, other than the audio data stream, of the plurality of data streams as a video data stream, and identifying as the video fragment (406), a data fragment comprised in the video data stream.

3. The method according to claim 1, wherein the method further comprises:
identifying a transmission mode of the video service (401); and when the transmission mode of the video service is a transmission mode in which there are at least two concurrently transmitted data streams, performing the step of identifying an audio fragment and a video fragment from a data stream of a video service, and recording a size of the audio fragment and a size of the video fragment.

4. A video bit rate identification apparatus, comprising an identification unit and a calculation unit, wherein
the identification unit (51) is configured to: identify an audio fragment and a video fragment from a data stream of a video service, and record a size of the audio fragment and a size of the video fragment;
the calculation unit (52) is configured to calculate playback duration of the audio fragment by using a pre-obtained audio bit rate and the size of the audio fragment; and
the calculation unit is further configured to: use the playback duration of the audio fragment as playback duration of the video fragment, and calculate a bit rate of the video fragment by using the size and the playback duration of the video fragment,
**characterized in**
**that** the identification unit is configured to: identify a plurality of audio fragments and a plurality of video fragments from the data stream of the video service, and record a size of each audio fragment and a size of each video; and
the calculation unit is configured to: when the audio fragments are in a one-to-one correspondence to the video fragments in the data stream of the video service, obtain a separate playback duration of each video fragment, and calculate a separate bit rate of each video fragment, wherein the respective playback duration of the video fragment is the playback duration of the audio fragment corresponding to the video fragment, and the bit rate of the video fragment is calculated by using the playback duration and the size of the video fragment; or
the calculation unit is configured to: when the audio fragments are not in a one-to-one correspondence to the video fragments in the data stream of the video service, add up playback durations of all the audio fragments, and use an obtained value as total playback duration of the at least one video fragment; add up sizes of all the video fragments, and use an obtained value as a total size of the at least one video fragment; and calculate an average bit rate of the at least one video fragment by using the total playback duration and the total size of the at least one video fragment, wherein when the number of audio fragments are the same as the number of video fragments, the audio fragments are in a one-to-one correspondence to the video fragments in the data stream of the video service.

5. The apparatus according to claim 4, wherein the identification unit (51) is configured to: identify a plurality of data fragments comprised in the data stream of the video service, use the audio bit rate to identify the audio fragment from the plurality of data fragments, and identify a data fragment, other than the audio fragment, from the plurality of data fragments as the video fragment; or
the identification unit (51) is configured to: use the audio bit rate to identify an audio data stream from a plurality of data streams comprised in the video service, identify as the audio fragment, a data fragment comprised in the audio data stream, use a data stream, other than the audio data stream, of the plurality of data streams as a video data stream, and identify as the video fragment, a data fragment comprised in the video data stream.

6. The apparatus according to claim 4, wherein the identification unit (51) is further configured to:
identify a transmission mode of the video service; and when the transmission mode of the video service is a transmission mode in which there are at least two concurrently transmitted data streams, identify an audio fragment and a video fragment from the data streams of the video service, and record a size of the audio fragment and a size of the video fragment.

## Patentansprüche

1. Verfahren zur Videobitratenidentifizierung, umfassend:
Identifizieren (101) eines Audiofragments und eines Videofragments aus einem Datenstrom eines Videodienstes und Erfassen einer Größe des Audiofragments und einer Größe des Videofragments;
Berechnen (102) von Wiedergabedauer des Audiofragments mithilfe einer vorab erhaltenen Audiobitrate und der Größe des Audiofragments; und
Nutzen (103) der Wiedergabedauer des Audiofragments als Wiedergabedauer des Videofragments und Berechnen einer Bitrate des Videofragments mithilfe der Größe und der Wiedergabedauer des Videofragments;
**dadurch gekennzeichnet, dass**
das Identifizieren eines Audiofragments und eines Videofragments aus einem Datenstrom eines Videodienstes und Erfassen einer Größe des Audiofragments und einer Größe des Videofragments Folgendes umfasst:
Identifizieren mindestens eines Audiofragments und mindestens eines Videofragments aus dem Datenstrom des Videodienstes und Erfassen einer Größe jedes Audiofragments und einer Größe jedes Videofragments; und
das Nutzen der Wiedergabedauer des Audiofragments als Wiedergabedauer des Videofragments und Berechnen einer Bitrate des Videofragments mithilfe der Größe und der Wiedergabedauer des Videofragments Folgendes umfasst:
wenn das Audiofragment in einer Eins-zu-Eins-Entsprechung (309) zu dem Videofragment in dem Datenstrom des Videodienstes vorliegt, Erhalten einer separaten Wiedergabedauer jedes Videofragments und Berechnen einer separaten Bitrate jedes Video fragments (311), wobei die Wiedergabedauer eines Videofragments die Wiedergabedauer des Audiofragments ist, das dem Videofragment (310) entspricht, und die Bitrate des Videofragments mithilfe der Wiedergabedauer und der Größe des Videofragments berechnet wird; oder
wenn das Audiofragment nicht in einer Eins-zu-Eins-Entsprechung zu dem Videofragment in dem Datenstrom des Videodienstes vorliegt, Aufaddieren von Wiedergabedauem aller Audiofragmente (312) und Nutzen eines erhaltenen Werts als Gesamtwiedergabedauer des mindestens einen Videofragments; Aufaddieren von Größen aller Videofragmente und Nutzen eines erhaltenen Werts als eine Gesamtgröße des mindestens einen Videofragments; und Berechnen einer durchschnittlichen Bitrate des mindestens einen Videofragments mithilfe der Gesamtwiedergabedauer und der Gesamtgröße des mindestens einen Videofragments, wobei
wenn die Anzahl von Audiofragmenten dieselbe wie die Anzahl von Videofragmenten ist,
das Audiofragment in einer Eins-zu-Eins-Entsprechung zu dem Videofragment in dem Datenstrom des Videodienstes vorliegt.

2. Verfahren nach Anspruch 1, wobei das Identifizieren eines Audiofragments und eines Videofragments aus einem Datenstrom eines Videodienstes Folgendes umfasst:
Identifizieren einer Mehrzahl von Datenfragmenten, die in dem Datenstrom des Videodienstes enthalten sind, mithilfe der Audiobitrate, um das Audiofragment aus der Mehrzahl von Datenfragmenten zu identifizieren (405), und Identifizieren eines anderen Datenfragments als das Audiofragment aus der Mehrzahl von Datenfragmenten als das Videofragment; oder
Nutzen der Audiobitrate, um einen Audiodatenstrom aus einer Mehrzahl von Datenströmen zu identifizieren, die in dem Videodienst enthalten sind, Identifizieren eines Datenfragments, das in dem Audiodatenstrom enthalten ist, als das Audiofragment, Nutzen eines anderen Datenstroms als der Audiodatenstrom der Mehrzahl von Datenströmen als ein Videodatenstrom, und Identifizieren eines Datenfragments, das in dem Videodatenstrom enthalten ist, als das Videofragment (406).

3. Verfahren nach Anspruch 1, wobei das Verfahren ferner Folgendes umfasst:
Identifizieren eines Übertragungsmodus des Videodienstes (401); und wenn der Übertragungsmodus des Videodienstes ein Übertragungsmodus ist, bei dem mindestens zwei gleichzeitig übertragene Datenströme vorhanden sind, Durchführen des Schritts des Identifizierens eines Audiofragments und eines Videofragments aus einem Datenstrom eines Videodienstes und Erfassen einer Größe des Audiofragments und einer Größe des Videofragments.

4. Vorrichtung zur Videobitratenidentifizierung, umfassend eine Identifizierungseinheit und eine Recheneinheit, wobei
die Identifizierungseinheit (51) dazu ausgebildet ist: ein Audiofragment und ein Videofragment aus einem Datenstrom eines Videodienstes zu identifizieren und eine Größe des Audiofragments und eine Größe des Videofragments zu erfassen;
die Recheneinheit (52) dazu ausgebildet ist, die Wiedergabedauer des Audiofragments mithilfe einer vorab erhaltenen Audiobitrate und der Größe des Audiofragments zu berechnen; und
die Recheneinheit ferner dazu ausgebildet ist: die Wiedergabedauer des Audiofragments als Wiedergabedauer des Videofragments zu nutzen und eine Bitrate des Videofragments mithilfe der Größe und der Wiedergabedauer des Video fragments zu berechnen,
**dadurch gekennzeichnet,**
**dass** die Identifizierungseinheit dazu ausgebildet ist: eine Mehrzahl von Audiofragmenten und eine Mehrzahl von Videofragmenten aus dem Datenstrom des Videodienstes zu identifizieren und eine Größe jedes Audiofragments und eine Größe jedes Videos zu erfassen; und
die Recheneinheit dazu ausgebildet ist: wenn die Audiofragmente in einer Eins-zu-Eins-Entsprechung zu den Videofragmenten in dem Datenstrom des Videodienstes vorliegen, eine separate Wiedergabedauer jedes Videofragments zu erhalten und eine separate Bitrate jedes Videofragments zu berechnen, wobei die jeweilige Wiedergabedauer des Videofragments die Wiedergabedauer des Audiofragments ist, das dem Videofragment entspricht, und die Bitrate des Videofragments mithilfe der Wiedergabedauer und der Größe des Videofragments berechnet wird; oder
die Recheneinheit dazu ausgebildet ist: wenn die Audiofragmente nicht in einer Eins-zu-Eins-Entsprechung zu den Videofragmenten in dem Datenstrom des Videodienstes vorliegen, Wiedergabedauern all der Audiofragmente aufzuaddieren und einen erhaltenen Wert als Gesamtwiedergabedauer des mindestens einen Videofragments zu nutzen; Größen all der Videofragmente aufzuaddieren und einen erhaltenen Wert als eine Gesamtgröße des mindestens einen Videofragments zu nutzen; und eine durchschnittliche Bitrate des mindestens einen Videofragments mithilfe der Gesamtwiedergabedauer und der Gesamtgröße des mindestens einen Videofragments zu berechnen, wobei
wenn die Anzahl von Audiofragmenten dieselbe wie die Anzahl von Videofragmenten ist, die Audiofragmente in einer Eins-zu-Eins-Entsprechung zu den Videofragmenten in dem Datenstrom des Videodienstes vorliegen.

5. Vorrichtung nach Anspruch 4, wobei die Identifizierungseinheit (51) dazu ausgebildet ist: eine Mehrzahl von Datenfragmenten zu identifizieren, die in dem Datenstrom des Videodienstes enthalten sind, die Audiobitrate zu nutzen, um das Audiofragment aus der Mehrzahl von Datenfragmenten zu identifizieren, und ein anderes Datenfragment als das Audiofragment aus der Mehrzahl von Datenfragmenten als das Videofragment zu identifizieren; oder
die Identifizierungseinheit (51) dazu ausgebildet ist: die Audiobitrate zu nutzen, um einen Audiodatenstrom aus einer Mehrzahl von Datenströmen zu identifizieren, die in dem Videodienst enthalten sind, ein Datenfragment, das in dem Audiodatenstrom enthalten ist, als das Audiofragment zu identifizieren, einen anderen Datenstrom als der Audiodatenstrom der Mehrzahl von Datenströmen als ein Videodatenstrom zu nutzen, und ein Datenfragment, das in dem Videodatenstrom enthalten ist, als das Videofragment zu identifizieren.

6. Vorrichtung nach Anspruch 4, wobei die Identifizierungseinheit (51) ferner dazu ausgebildet ist: einen Übertragungsmodus des Videodienstes zu identifizieren; und wenn der Übertragungsmodus des Videodienstes ein Übertragungsmodus ist, bei dem mindestens zwei gleichzeitig übertragene Datenströme vorhanden sind, ein Audiofragment und ein Videofragment aus den Datenströmen des Videodienstes zu identifizieren und eine Größe des Audiofragments und eine Größe des Videofragments zu erfassen.

## Revendications

1. Procédé d'identification de débit binaire vidéo, comprenant les étapes suivantes :
identifier (101) un fragment audio et un fragment vidéo à partir d'un flux de données d'un service vidéo, et enregistrer une taille du fragment audio et une taille du fragment vidéo ;
calculer (102) une durée de lecture du fragment audio en utilisant un débit binaire audio pré-obtenu et la taille du fragment audio ; et
utiliser (103) la durée de lecture du fragment audio comme une durée de lecture du fragment vidéo, et calculer un débit binaire du fragment vidéo en utilisant la taille et la durée de lecture du fragment vidéo ;
**caractérisé en ce que**
l'étape d'identification d'un fragment audio et d'un fragment vidéo à partir d'un flux de données d'un service vidéo et l'étape d'enregistrement d'une taille du fragment audio et d'une taille du fragment vidéo comprennent :
identifier au moins un fragment audio et au moins un fragment vidéo à partir du flux de données du service vidéo, et enregistrer une taille de chaque fragment audio et une taille de chaque fragment vidéo ; et
l'étape d'utilisation de la durée de lecture du fragment audio comme une durée de lecture du fragment vidéo, et l'étape de calcul d'un débit binaire du fragment vidéo en utilisant la taille et la durée de lecture du fragment vidéo comprennent :
lorsque le fragment audio est dans une correspondance biunivoque (309) avec le fragment vidéo dans le flux de données du service vidéo, obtenir une durée de lecture séparée de chaque fragment vidéo, et calculer un débit binaire séparé de chaque fragment vidéo (311), la durée de lecture d'un fragment vidéo étant la durée de lecture du fragment audio correspondant au fragment vidéo (310), et le débit binaire du fragment vidéo étant calculé en utilisant la durée de lecture et la taille du fragment vidéo ; ou
lorsque le fragment audio n'est pas dans une correspondance biunivoque avec le fragment vidéo dans le flux de données du service vidéo, additionner les durées de lecture de tous les fragments audio (312), et utiliser une valeur obtenue comme une durée de lecture totale de l'au moins un fragment vidéo ; additionner les tailles de tous les fragments vidéo, et utiliser une valeur obtenue comme une taille totale de l'au moins un fragment vidéo ; et calculer un débit binaire moyen de l'au moins un fragment vidéo en utilisant la durée de lecture totale et la taille totale de l'au moins un fragment vidéo,
lorsque le nombre de fragments audio est le même que le nombre de fragments vidéo,
le fragment audio étant dans une correspondance biunivoque avec le fragment vidéo dans le flux de données du service vidéo.

2. Procédé selon la revendication 1, dans lequel l'étape d'identification d'un fragment audio et d'un fragment vidéo à partir d'un flux de données d'un service vidéo comprend :
identifier une pluralité de fragments de données compris dans le flux de données du service vidéo, utiliser le débit binaire audio pour identifier le fragment audio à partir de la pluralité de fragments de données (405), et identifier un fragment de données,
autre que le fragment audio, à partir de la pluralité de fragments de données comme le fragment vidéo ; ou
utiliser le débit binaire audio pour identifier un flux de données audio à partir d'une pluralité de flux de données compris dans le service vidéo, identifier comme le fragment audio, un fragment de données compris dans le flux de données audio, utiliser un flux de données, autre que le flux de données audio, de la pluralité de flux de données comme un flux de données vidéo, et identifier comme le fragment vidéo (406), un fragment de données compris dans le flux de données vidéo.

3. Procédé selon la revendication 1, comprenant en outre :
identifier un mode de transmission du service vidéo (401) ; et lorsque le mode de transmission du service vidéo est un mode de transmission dans lequel il y a au moins deux flux de données transmis simultanément, exécuter l'étape d'identification d'un fragment audio et d'un fragment vidéo à partir d'un flux de données d'un service vidéo, et enregistrer une taille du fragment audio et une taille du fragment vidéo.

4. Appareil d'identification de débit binaire vidéo, comprenant une unité d'identification et une unité de calcul, dans lequel
l'unité d'identification (51) est configurée pour : identifier un fragment audio et un fragment vidéo à partir d'un flux de données d'un service vidéo, et enregistrer une taille du fragment audio et une taille du fragment vidéo ;
l'unité de calcul (52) est configurée pour calculer une durée de lecture du fragment audio en utilisant un débit binaire audio pré-obtenu et la taille du fragment audio ; et l'unité de calcul est configurée en outre pour : utiliser la durée de lecture du fragment audio comme une durée de lecture du fragment vidéo, et calculer un débit binaire du fragment vidéo en utilisant la taille et la durée de lecture du fragment vidéo, **caractérisé en ce que**
l'unité d'identification est configurée pour : identifier une pluralité de fragments audio et une pluralité de fragments vidéo à partir du flux de données du service vidéo, et enregistrer une taille de chaque fragment audio et une taille de chaque fragment vidéo ; et
l'unité de calcul est configurée pour : lorsque les fragments audio sont dans une correspondance biunivoque avec les fragments vidéo dans le flux de données du service vidéo, obtenir une durée de lecture séparée de chaque fragment vidéo, et calculer un débit binaire séparé de chaque fragment vidéo, la durée de lecture respective du fragment vidéo étant la durée de lecture du fragment audio correspondant au fragment vidéo, et le débit binaire du fragment vidéo étant calculé en utilisant la durée de lecture et la taille du fragment vidéo ; ou
l'unité de calcul est configurée pour : lorsque les fragments audio ne sont pas dans une correspondance biunivoque avec les fragments vidéo dans le flux de données du service vidéo, additionner les durées de lecture de tous les fragments audio, et utiliser une valeur obtenue comme une durée de lecture totale de l'au moins un fragment vidéo ; additionner les tailles de tous les fragments vidéo, et utiliser une valeur obtenue comme une taille totale de l'au moins un fragment vidéo ; et calculer un débit binaire moyen de l'au moins un fragment vidéo en utilisant la durée de lecture totale et la taille totale de l'au moins un fragment vidéo,
lorsque le nombre de fragments audio est le même que le nombre de fragments vidéo, les fragments audio étant dans une correspondance biunivoque avec les fragments vidéo dans le flux de données du service vidéo.

5. Appareil selon la revendication 4, dans lequel l'unité d'identification (51) est configurée pour : identifier une pluralité de fragments de données compris dans le flux de données du service vidéo, utiliser le débit binaire audio pour identifier le fragment audio à partir de la pluralité de fragments de données, et identifier un fragment de données, autre que le fragment audio, à partir de la pluralité de fragments de données comme le fragment vidéo ; ou
l'unité d'identification (51) est configurée pour : utiliser le débit binaire audio pour identifier un flux de données audio à partir d'une pluralité de flux de données compris dans le service vidéo, identifier comme le fragment audio, un fragment de données compris dans le flux de données audio, utiliser un flux de données, autre que le flux de données audio, de la pluralité de flux de données comme un flux de données vidéo, et identifier comme le fragment vidéo, un fragment de données compris dans le flux de données vidéo.

6. Appareil selon la revendication 4, dans lequel l'unité d'identification (51) est configurée en outre pour : identifier un mode de transmission du service vidéo ; et lorsque le mode de transmission du service vidéo est un mode de transmission dans lequel il y a au moins deux flux de données transmis simultanément, identifier un fragment audio et un fragment vidéo à partir du flux de données du service vidéo, et enregistrer une taille du fragment audio et une taille du fragment vidéo.
